# EUROPÄISCHE PATENTSCHRIFT

(11) **EP 0 623 183 B1**
(45) Veröffentlichungstag und Bekanntmachung des Hinweises auf die Patenterteilung: **25.03.1998**
(21) Anmeldenummer: 93902176.2
(22) Anmeldetag: 12.01.1993
(51) Int. Cl.: E04F 10/06, F16B 37/04

(54) **PROFILMONTAGEELEMENT FÜR DIE AUFNAHME UND HALTERUNG VERSCHIEDENER BEFESTIGUNGS- UND/ODER BEWEGUNGSELEMENTE EINER MARKISE**
FITTING SECTION FOR ACCEPTING AND HOLDING VARIOUS SECURING AND/OR MOVING COMPONENTS OF AN AWNING
ELEMENT DE MONTAGE PROFILE DESTINE A RECEVOIR ET A MAINTENIR DIFFERENTS ELEMENTS DE FIXATION ET/OU DE DEPLACEMENT D'UN STORE A BANNES

(30) Priorität: 13.01.1992 CH 85/92
(43) Veröffentlichungstag der Anmeldung: 09.11.1994
(73) Patentinhaber: CEDIS LICENSING GMBH, 5020 Salzburg (AT)
(72) Erfinder: LOHAUSEN, Viktor, D-7101 Oberheinriet (DE)
(74) Vertreter: Rosenich, Paul, Dipl.-Ing.
(86) Internationale Anmeldenummer: EP9300051
(87) Internationale Veröffentlichungsnummer: WO9314283

(56) Entgegenhaltungen:
- WO-A-88/07115
- DE-A- 3 820 471
- DE-U- 8 802 679
- FR-A- 1 545 852
- GB-A- 1 579 941
- US-A- 4 830 531

## Beschreibung

Die Erfindung betrifft ein Profilmontageelement nach dem Oberbegriff des Anspruches 1. Solche Montageelemente, früher häufig auch Montagerohre genannt, sind bei Gelenkarmmarkisen erforderlich, um die mechanischen Teile über die Länge der betreffenden Gelenkarmmarkise aufzunehmen. Sie tragen daher zu einem Teil das Gewicht und nehmen verschiedenste mechanische Belastungen auf.

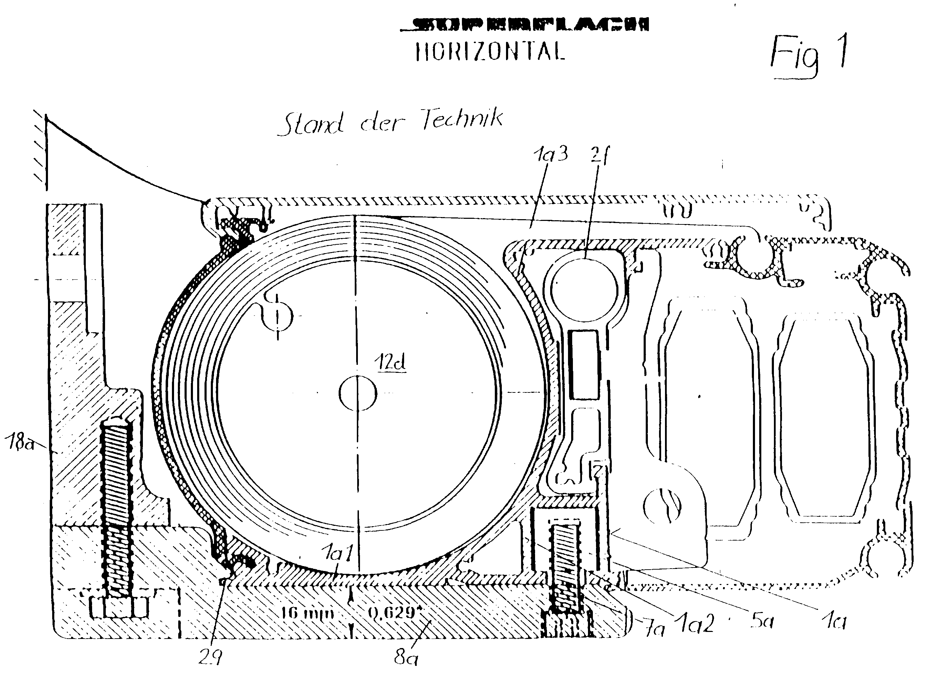

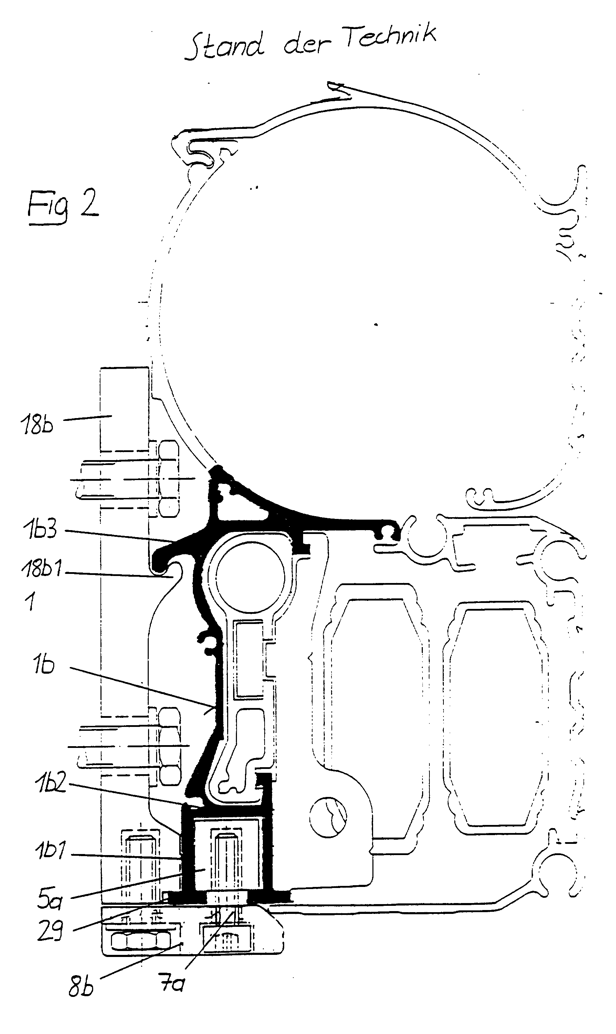

Aus diesem Grund sollen sie drehfest, bruchsicher und insgesamt stabil sein. Auf dem Markt sind Discus Horizontal und Discus Vertikal, zwei Markisensysteme, bekannt geworden, die Profilmontageelemente aufweisen (siehe Fig.1 und Fig.2). Die beiden bekannt gewordenen Profilmontageelemente waren für jeden Anwendungszweck unterschiedlich ausgebildet, wie aus Fig.1 und Fig.2 ersehen werden kann. Für die Anordnung gemäss Fig. 1 wurde es durch einen grossvolumigen Bauteil gebildet, der einerseits durch eine Nut-Federverbindung und andererseits durch eine Schraubverbindung mit einem Tragarm verbunden war. Im zweiten Fall (Fig.2) war das Profilmontageelement ein schlanker, hoher Bauteil, im unteren Bereich rechtwinklig ausgeführt, dort mit einer Schraube einseitig an einem Tragarm festgelegt, mit einer zweiten Seite formschlüssig an einer Tragkonsole, die mit dem Tragarm starr verbunden war, verbunden und an einer Nase zwischen Tragarm und Konsole eingeklemmt.

In der WO-A-8807115, die auf den selben Erfinder zurückgeht, ist ein Tragelement dargestellt, dass dem Oberbegriff des Anspruches 1 entspricht. Ein zentrales Tragelement wird dort durch einen markisengehäuseähnlichen grossvolumigen Teil gebildet, so dass das Tragelement selbst den wesentlichen Aufbau der Markise bestimmt. Die Möglichkeiten von Variationen zu unterschiedlichen Aufbauten sind durch diesen bekannten Aufbau eingeschränkt.

Diese unterschiedlichen Konstruktionen führten zur Notwendigkeit, für die Herstellung unterschiedlicher Markisenkonstruktionen auch unterschiedliche Profilmontageelemente herzustellen, was produktionstechnisch bei zwei unterschiedlichen Markisenkonstruktionen mit fast doppeltem Aufwand verbunden war.

Der Erfindung liegt die Aufgabe zugrunde, ein Profilmontageelement zu schaffen, das universell einsetzbar ist und daher sowohl in der Nähe einer Tragkonsole als auch entfernt davon mit einem Tragarm verbunden werden kann und dort drehstarr festgelegt werden kann.

Ausserdem sollte das neue Profilmontageelement möglichst kleinvolumig sein. Es soll einfach in der Handhabung und problemlos zu befestigen sein. Darüber hinaus muss es ausreichend verwindungssteif sein.

Die gestellten Aufgaben werden in optimaler Weise durch die Merkmale des unabhängigen Anspruches 1 gelöst.

Die Ausbildung gemäss Anspruch 1 sieht zwei nebeneinander liegende Schraubverbindungen vor, die das neuartige Profilmontageelement dreh- und verwindungssteif auf einem Tragarm festlegbar machen. Eine zusätzliche, weite Ausladung des Profilmontageelementes, die beim Stand der Technik gemäss Fig.1 erforderlich war, entfällt ebenso wie die Notwendigkeit, das Profilmontageelement durch direkten Formschluss mit einer Wandkonsole (gemäss dem Stand der Technik nach Fig.2) dreh- und verwindungssteif zu stützen.

Das Merkmal des Zusammenwirkens von den Absätzen mit dem jeweiligen Nutensteinen macht ein an sich labiles und verwindungsweiches Profilmontageelement verwindungssteif und stabil. Allfällige Kerbwirkungen der Nuten sind hintangehalten.

Weitere Ausbildungen und Varianten sind in den abhängigen Ansprüchen beschrieben.

An Vorteilen und Anwendungsmöglichkeiten ergeben sich:

Die Dreiecksform baut besonders klein, wobei mit Vorzug das Dreieck etwa gleichschenklig ist und die Basisfläche einer Tuchwelle zugewendet werden kann. Ein Schenkel des Dreiecks bietet sodann genügend Auflage- und Festspannfläche, um den übrigen Erfordernissen gerecht zu werden.

Eine konkave Krümmung der Basisfläche erlaubt es, das Profilmontageelement näher an die Tuchwelle heranzurücken, wodurch Platz gespart wird.

Erfindungsgemäss kann das Profilmontageelement auch aus im nichtmontierten Zustand unverbundenen Schenkeln bestehen; bevorzugt und besonders stabil ist jedoch ein solches Element, wenn es in seinem Inneren über ein durchgehend wandungsstarkes Rohr verfügt. Die an sich bekannten scharnier- oder schnappverschlussförmigen Ausbildungen am Profilmontageelement dienen zur schnellen und sicheren Aufnahme von Abdeckungs-, Verblendungs- oder Versteifungselementen, die so wie bei bisherigen Gelenkarmmarkisen vorhanden sein können, infolge des neuartigen Profilmontageelementes aber nicht vorhanden sein müssen.

Die Ausbildung mit Längsbohrungen und zylindrischen Nutensteinen erspart das Anbringen zusätzlicher Scharniere oder Lagerteile, wobei gegebenenfalls auch verschleissfeste Einsätze in die entsprechenden Längsbohrungen eingebracht werden können.

Wie an sich bekannt, im Zusammenhang mit der Erfindung besonders bevorzugt, ist eine Herstellung desselben aus einer stranggepressten, korrosionsfesten Aluminiumlegierung.

Weitere Details der Erfindung, Vorteile und Anwendungsmöglichkeiten ergeben sich aus der Zeichnung und Figurenbeschreibung.

Die folgenden Bezugszeichen bezeichnen folgende Teile:
- 1: Profilmontageelement a,a1-3;b,b1-3;c,c1-3;d;e;f,f2;g;h;i
- 2: Befestigungs- und/oder Bewegungselemente a,b,c,d,e
- 3: Ausnehmung a,b,c,d,e,f,g,h,i,k,m,n,o,p,q,r,s,t
- 4: Vorsprünge a,b,c,d,
- 5: Nutenstein a,b,b2,b3,c,d,e
- 6: Gewindebohrung
- 7: Schraube a,b,d,e
- 8: Tragarm a,b,c,d,e,f,g
- 9: Absätze a,b,c,d,e,f
- 10: gegengleiche Ausnehmung
- 11: Basis des Polygons a
- 12: Tuchwelle a,b,c,d
- 13: Abdeckelement a
- 14: Verblendungselement a,b,c,d,e
- 15: Versteifungselement a,b
- 16: Kipphebelgelenk
- 18: Konsole a,b,bl,c,d
- 19: Verbindungsschraube
- 20: Bohrung
- 21: Getriebe a,b
- 22: Getriebehalterung
- 23: Verblendung a,b,c,d
- 24: Rohr
- 25: Befestigungsschraube
- 26: Auslenkarm a,b
- 27: Markisentuch
- 28: Längsrillen a,b
- 29: Nase
- 30: Abdecklamelle a,b (eingerastet)

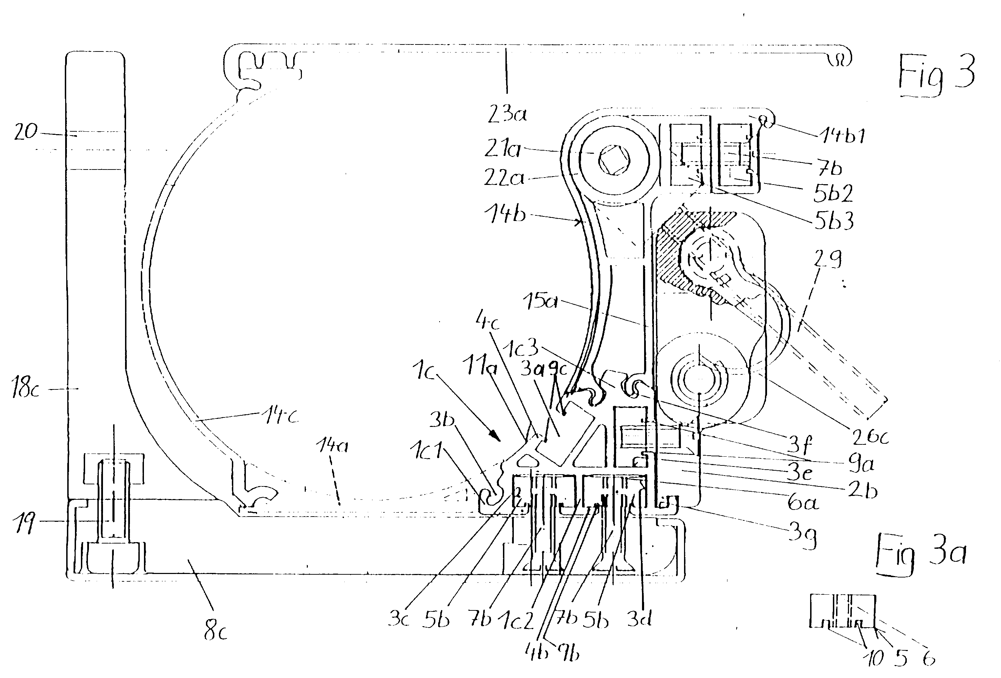

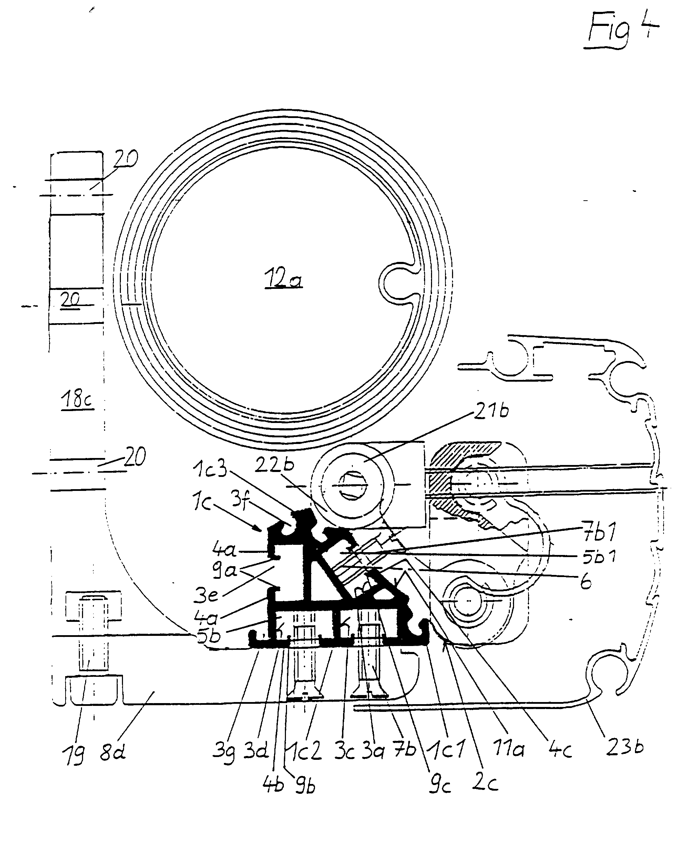

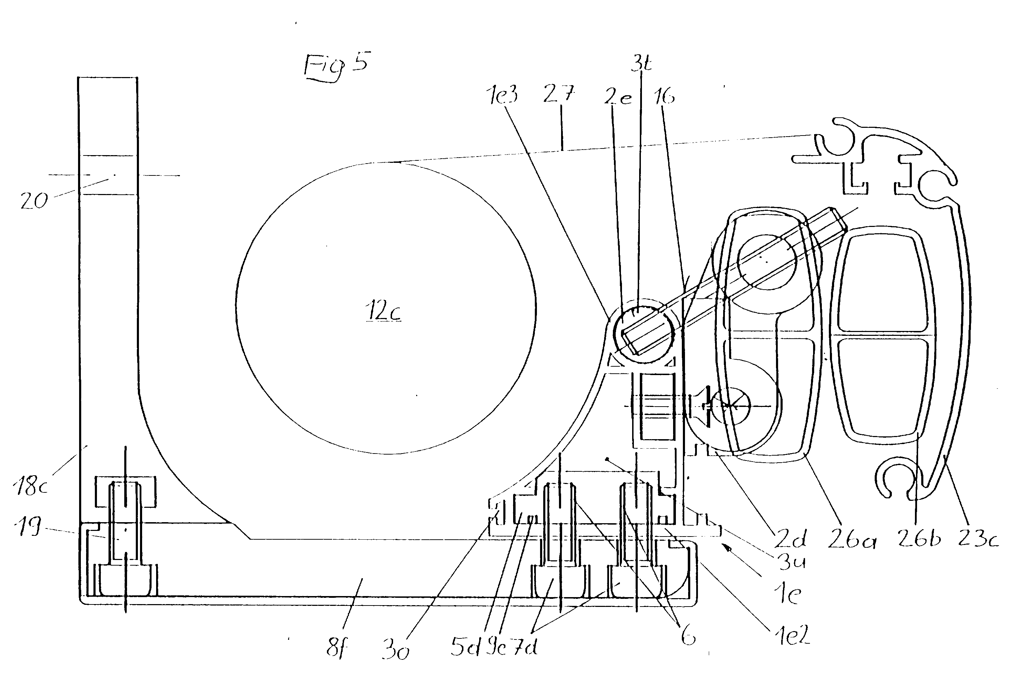

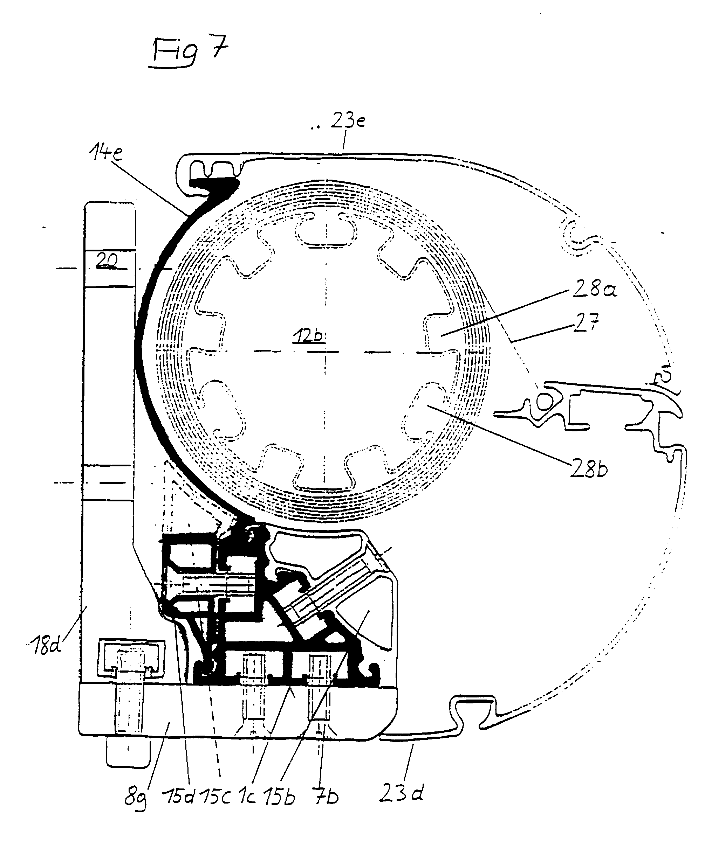

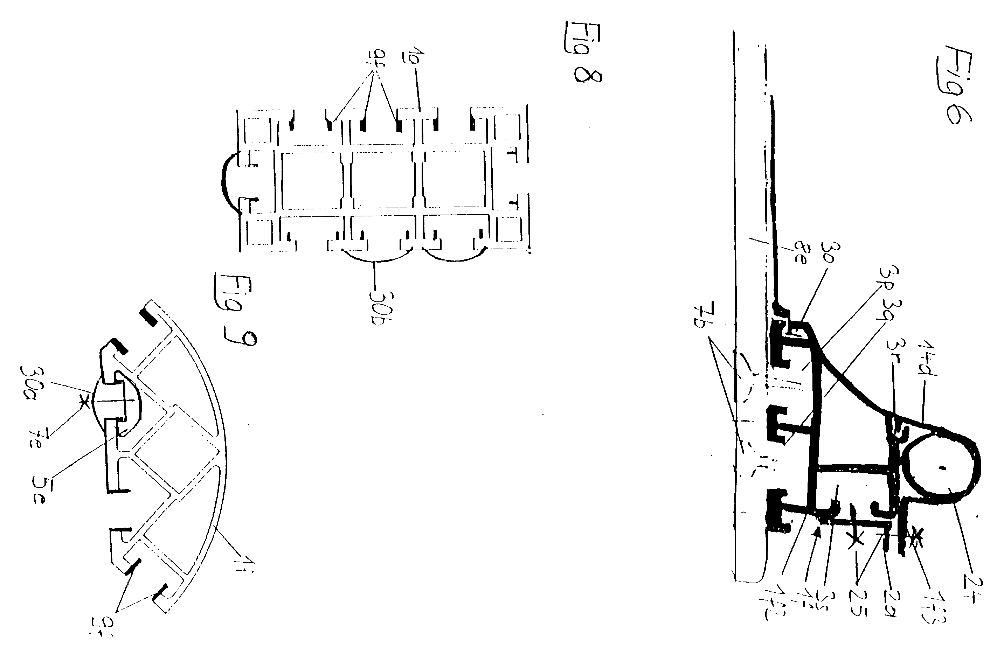

Die Figuren 1 und 2 stellen den Stand der Technik für Profilmontageelemente dar, die Figuren 3-7 zeigen universell verwendbare Profilmontageelemente für den Einsatz bei Gelenkarmmarkisen, wobei das Element gemäss Figur 3 und 4 ein und dasselbe ist, lediglich um eine vertikale Achse horizotal um 180° geschwenkt, die Figuren 5 und 7 zeigen Elemente mit nur einem Nutenstein, während die übrigen über zwei mal zwei Nutensteine pro Element verfügen. Die Fig. 3a zeigt einen Nutenstein aus der Fig.3 im Detail. Die Fig. 8 und 9 zeigen Profilquerschnitte, wie sie beispielsweise im Laden- oder Messebau zum Einsatz kommen, mit erfindungsgemässen Absätzen für Nutensteine und Abdecklamellen, die in Nuten der Elemente eingerastet sind, oder gemäss Fig.9 mittels Schraube an einem Nutenstein gehalten sind.

Die Zahlenangaben sind dabei auf das jeweilige Schnittbild abgestellt. In vielen Fällen können noch mehr Nutensteine - in Längsrichtung des Profilmontageelementes versetzt - vorgesehen sein.

Gleiche Bauteile tragen gleiche Bezugszeichen, ähnliche Bauteile tragen gleiche Bezugszeichen mit unterschiedlichen Indizes; die Figuren werden zusammenhängend und übergreifend beschrieben.

Eine Gelenkarmmarkise hatte in aller Regel an einem Tragarm 8 gehalten, der über Verbindungsschrauben 19 an eine Konsole 18 gebunden ist, die über Bohrungen 20 verfügt, durch welche die Konsole 18 an einer Mauer befestigt werden kann. Das Kernstück einer Gelenkarmmarkise aus dem Stand der Technik und auch bei der Erfindung ist ein Profilmontageelement 1, das einerseits über Schrauben 7 (im Stand der Technik nur eine Schraube) mit dem Tragarm 8 starr verbunden ist und andererseits Befestigungs- und/oder Bewegungselemente 2, Abdeckelemente 13, Verblendungselemente 14, Versteifungselemente 15 und/oder Kipphebelgelenke 16 aufzunehmen vermag. Die Profilmontageelemente 1a und 1b gemäss Stand der Technik waren relativ grossvolumige Bauteile, die für jeden Markisentyp gesondert angefertigt wurden. Sie wurden an je zwei voneinander deutlich entfernten Stellen mit dem Tragarm 8 und/oder der Konsole 18 verbunden. Das Profilmontageelement la gemäss Fig.1 ist mit einem Ende 1a1 bzw. mit einer Nase 29 in eine Nut des Tragarmes 8a gesteckt. Ihr Hauptteil 1a2 ist durch eine Schraube 7a, die in einen Nutenstein 5a eingedreht ist, der in einer Ausnehmung des Profilmontageelementes 1a eingesetzt ist, mit dem Tragarm 8a verschraubt. Der obere Teil 1a3 des Profilmontageelementes la dient einerseits als Abdeckung eines Raumes für die Tuchwelle 12d und andererseits als Versteifungselement für den Hauptteil 1a2 und als zusätzlicher Teil für die Befestigung von Befestigungselement 2f.

Die Nutensteine 5 gemäss Stand der Technik werden einmal - wie dargestellt - für die Befestigung des Profilmontageelementes 1 am Tragarm 8 und anderererseits für die Befestigung der Armlager für die Schwenkarme der Markise (hier nicht erkennbar) benutzt. Daraus ergibt sich der Nachteil, dass entlang der selben Schnittebene nur entweder die eine oder andere Befestigung mittels Nutensteine gewählt werden kann, was durch die Erfindung vermieden sein soll.

Im Stand der Technik, gemäss Fig.2, ist das eine Ende 1b1 stark verkürzt ausgebildet und praktisch mit dem Hauptteil 1b2 des Profilmontageelementes 1b zusammenfallend. Der Hauptteil 1b2 ist auch hier über Nutenstein 5a und Schraube 7a mit einem verkürzten Tragarm 8b verbunden. Die Verwindungssteifigkeit und Drehstabilität des Profilmontageelementes 1b wird hier dadurch erzielt, dass das obere Ende 1b3 des Profilmontageelementes 1b mit einer zweiten Nase bei einem gegengleichen Rastvorsprung 18b1 einer Konsole 18b festgelegt ist.

Entsprechend dem Ziel der Erfindung kann das erfindungsgemässe Profilmontageelement 1c gemäss Fig. 3, 4 und 7 bei den verschiedensten Markisentypen zum Einsatz gelangen. Es ist auch hier über Schrauben 7 und Lagersteine 5 mit dem jeweiligen Tragarm 8 verschraubt. Die erfindungsgemässen Profilmontageelemente 1c sind äusserst universell einsetzbar. Sie ziehen ihre Verwindungssteifigkeit aus der Tatsache, dass zwei nebeneinander liegende Schraubverbindungen mit Schrauben 7b vorgesehen sind und/oder, dass Vorsprünge 4, wie sie die Ausnehmungen 3 begrenzen, mit Absätzen 9 versehen sind, die in gegengleiche Ausnehmungen der Nutensteine 5 eingreifen. Ein Verklemmen der Nutensteine 5 gegen die flanschartigen Vorsprünge, wie es beim Anziehen der Schrauben 7 erfolgt, führt gleichzeitig zu einem unverschiebbaren Fixieren der Vorsprünge 4, so dass das Profilmontageelement 1c selbst bei einseitigen Belastungen stets wie ein völlig kompakter, homogener Bauteil zu wirken vermag. Wird beispielsweise bei der Ausnehmung 3g ein Zug nach rechts in horizontaler Richtung angebracht, so werden die dabei auftretenden Kräfte über die Vorsprünge 4 und Nutensteine 5 vollständig auf den gesamten Hauptteil 1c2 des Profilmontageelementes 1c verteilt. Die anderen Enden 1c1 und 1c3 sind im Gegensatz zum Stand der Technik verkümmert ausgebildet und mit Ausnehmungen 3b bzw. 3f versehen, in die Versteifungselemente 15a oder Verblendungselemente 14a eingesetzt werden können, nicht aber müssen. Die Lagestabilisierung des Profilmontageelementes 1c erfolgt erfindungsgemäss ausschliesslich durch die Schrauben 7b. Im Beispiel Fig.3 dient das Versteifungselement 15a zur Aufnahme eines Markisengetriebes 21a, dessen Welle 29 schematisch angedeutet ist. Das Versteifungselement 15a ist durch Verblendungselement 14b abgedeckt, das an seinem abragenden Ende 14b1 über eine Schraube 7b und einen Nutenstein 5b3 mit dem Versteifungselement 15a verbunden ist. Entsprechend den Teilen 14b und 14a ist ein weiteres Verblendungselement 14c an der Konsolenseite der Markise vorgesehen, das in seinem oberen Bereich mit einer Verblendung 23a verbunden ist, die ein Dach für die eingefahrene Markise bildet. Ein Befestigungselement 2b ist nach dem gleichen System über einen Lagerstein in einer nutförmigen Ausnehmung 3e angeschraubt. Es trägt einen nicht mehr beschriebenen Auslenkarm 26c.

Der Markisenaufbau gemäss Fig.3 entspricht von der Bauform her etwa dem Aufbau des Standes der Technik gemäss Fig.1. Der Aufbau gemäss Fig.4 entspricht vom Prinzip her etwa dem Aufbau gemäss Stand der Technik Fig.2 nd doch sind bei beiden erfindungsgemässen Varianten ein und die selben Profilmontageelemente 1c vorgesehen.

Gemäss Fig.4 ist der Aufbau lediglich um eine vertikale Achse um 180° geschwenkt und auf einem verkürzten Tragarm 8d direkt unterhalb der Tuchwelle 12a montiert. Wie aus beiden Figuren ersichtlich, können im Sinne der Universalität durchaus Ausnehmungen 3a bzw. 3e unbenutzt bleiben. Solche Ausnehmungen insbesondere, wenn sie mit Vorsprüngen 4 und Absätzen 9 versehen sind, können durch nicht dargestellte Nutensteine und Abdeckflächen oder durch Aluminiumlamellen, die einfach eingeschnappt werden, kraft- oder formschlüssig verkleidet werden.

Der Aufbau gemäss Fig.4 ist im Schnitt annähernd qadratisch. Eine Getriebehalterung 22b ist hier mit einem Befestigungselement 2c verbunden und trägt ein Getriebe 21b. Das Befestigungselement 2c ist im Teil 1c1 und 1c3 des Profilmontageelementes 1c gehalten und zusätzlich durch eine Schraube 7b1 und einen Nutenstein 5b1 mit dem Profilmontageelement 1c starr verbunden. Die Befestigungselemente 2c und b (Fig.3) versteifen dabei jeweils gleichzeitig das Profilmontageelement. Genauso dienen aber auch die Nutensteine 5 selbst einer gewissen Versteifung des Elementes 1, die durch entsprechende Wahl der Nutensteinlänge variiert werden kann.

Der Aufbau gemäss Fig.6 ist wieder betont flach gehalten. Sein Profilmontageelement 1e ist im oberen Teil 1e3 mit einer rohrförmigen Ausnehmung 3t versehen, die ein Bewegungselement 2e scharnierartig aufnimmt, welches mit einem Kipphebelgelenk 16 verbunden ist. Ein seitlicher Schlitz in der Wandung des oberen Teiles 1e3 ermöglicht ein Schwenken des Kipphebelgelenkes 16 in vertikaler Richtung.

Das hier dargestellte Befestigungselement 2d trägt die Auslenkarme 26a und b. In allen Fig.4-5 ist eine Verblendung 23 angedeutet, die im ausgefahrenen Zustand den entferntesten Teil von der Tuchwelle 12c bildet und ein dazwischen angeordnetes Markisentuch 27 spannt. Im Hauptteil 1e2 des Profilmontageelementes 1e ist im Gegensatz zu den bisherigen Beispielen keine offene Nut dargestellt, sondern eine rohrförmige Ausnehmung 3u, in die ein Nutenstein 5d eingeschoben ist. Der Nutenstein 5d befindet sich mit seinen beiden Gewindebohrungen 6 unmittelbar über Bohrungen in der Wandung des Hauptteiles 1e2 und im Tragarm 8f, durch die die Schrauben 7d eingedreht sind.

Absätze 9e sind zwar angedeutet, müssten im vorliegenden Fall jedoch nicht unbedingt vorhanden sein.

Die Variante gemäss Fig.6 zeigt einen ähnlichen Aufbau wie in Fig.5 mit dem Unterschied, dass im Hauptteil 1f2 des Profilmontageelementes 1f wieder zwei nutförmige Ausnehmungen 3p und 3q vorgesehen sind und dass der obere Teil 1f3 nicht wie bei Fig.5 mit einer integralen Rohrausnehmung versehen ist, sondern vielmehr ein Rohr 24 trägt, das durch ein Verblendungselement 14d an das Profilmontageelement 1f gedrückt gehalten ist. Das Verblendungselement 14d greift einerseits in eine schnappverschlussartige Ausnehmung 3r im oberen Teil 1f3. Andererseits wird es durch eine Befestigungsschraube 25 mit einem Befestigungselement 2a verschraubt, das seinerseits über eine weitere Befestigungsschraube 25 über einen Nutenstein in einer Ausnehmung 3s des Hauptteiles 1f2 festgelegt ist.

Die erfindungsgemässe Ausbildung gemäss Fig.7 entspricht ebenso vom Typ her wieder einer Markise gemäss Stand der Technik Fig.2. Hier sind drei Versteifungselemente 15b, c und d dargestellt, die wahlweise über die ganze Länge oder auch nur stückweise mit dem Profilmontageelement 1c verbunden sind. Einmal mehr erkennt man die kompakte Bauweise und beliebige Veränderbarkeit des erfindungsgemässen universellen Profilmontageelementes. Das Versteifunsgelement 15c ist nur strichpunktiert angedeutet. Ein Verblendungselement 14e schützt die Tuchwelle 12b gegen den Wandbereich und trägt gleichzeitig eine dachförmige Verblendung 23e. Das Markisentuch 27 ist an einem Keder in einer Rille einer Verblendung 23d eingespannt. Die Tuchwelle 12b besteht aus Aluminium und ist entlang ihres Umfanges im Schnitt durch Rillen 28 profiliert, die eine Versteifung bei gleichzeitiger Gewichtseinsparung mit sich bringen.

Ausserdem erleichtern die Längsrillen 28 das Austrocknen eines allfällig durchnässten Markisentuches 27. Weiters dienen die Rillen 28, zumal sie im aufgewickelten Zustand des Tuches 27 Kanäle bilden der Luftzufuhr zu einem allfälligen elektrischen Antriebsmotor. Dieser kann dabei dann kleiner dimensioniert werden und die Welle selbst kann mit kleinerem Durchmesser - bei gleicher Tuchleistung - versehen werden.

Hinterschnittene Längsrillen 28b erleichtern ausserdem das Festklemmen des Markisentuches wellenseitig mit Hilfe eines Keders oder einer Feder. Konische Ausbildungen der Nuten erlauben auch das Einschieben von Klötzen, Nutensteinen o.dgl., wobei diese für Befestigungszwecke, aber auch zur Versteifung vorgesehen sein können.

Durch die dargestellten Beispiele ist die Erfindung nicht eingeschränkt. So können insbesondere die Profilmontageelemente auch beliebig andere Querschnittsformen wie beispielsweise rechteckige Formen aufweisen.

Das erfindungsgemässe Profilmontageelement kann erfindungsgemäss auch der Befestigung des Tuchwellenlagers, der Scharnierhalterung und Schienenhalterung für Fallarm- und Schienenmarkisen dienen; im letzteren Fall insbesondere dann, wenn die Schienen dort asymmetrisch oder mittig versetzt sind.

Ein weiteres Anwendungsgebiet ergibt sich z.B. beim Messebau, wobei dort die erfindungsgemässen Profilelemente, insbesondere der Ansprüche 2 bis 4, gerüstmässig zum Einsatz gelangen.

## Patentansprüche

1. Markise mit wenigstens einem Tragarm (8), an dem ein Montageelement (1) befestigt ist für die Aufnahme und Halterung verschiedener Befestigungs- und/oder Bewegungselemente (2), mit nut- und/oder rohrförmigen Ausnehmungen (3) für die Aufnahme der Befestigungs- und/oder Bewegungselemente (2), von welchen Ausnehmungen (3) eine mit im Schnitt flanschartigen Vorsprüngen (4) versehen ist und einen Nutenstein (5) mit einer Gewindebohrung (6) für die Aufnahme einer Schraube (7) aufnimmt, die zur Befestigung des Montageelementes (1) am Tragarm (8) dient, **dadurch gekennzeichnet,** dass das Montageelement als im Schnitt etwa polygones Profilmontageelement (1) ausgebildet ist, wobei an wenigstens zwei Seiten des Polygons Ausnehmungen (3) ausgebildet sind, und wobei die Ausnehmung(en) an einer Seite des Polygons für den Durchtritt von zwei nebeneinander liegenden Befestigungsschrauben (7) ausgebildet ist (sind), wobei im Nutenstein (5) mindestens zwei nebeneinander liegende Gewindebohrungen (6), oder wobei nebeneinander mindestens zwei Ausnehmungen (3) mit mindestens je einem Nutenstein (5) für mindestens je eine Schraube (7) vorgesehen sind, und dass im Betriebszustand die spannkraftübertragende Verbindung zwischen Profilmontageelement (1) und Tragarm (8) ausschliesslich über die Schrauben (7) erfolgt, und dass wenigstens an einer Seite des Polygons Ausnehmungen (3) angeordnet sind, an denen die flanschartigen Vorsprünge (4) nach innen ragende Absätze (9) für das Eingreifen in - vorzugsweise gegengleiche - Ausnehmungen (10) im jeweiligen Nutenstein (5) aufweisen.

2. Markise nach Anspruch 1, **dadurch gekennzeichnet,** dass die polygonale Querschnittsform verschieden lange Seitenlängen aufweist, und dass - im montierten Zustand - die Basis (11) der polygonalen Querschnittsform bevorzugt einer Tuchwelle (12) der Markise zugewandt ist.

3. Markise nach Anspruch 2, **dadurch gekennzeichnet,** dass die Basis der polygonalen Querschnittsform, die der Tuchwelle benachbart ist, konkav gekrümmt ist, und sich derart dem Umfang der Tuchwelle anschmiegt.

4. Markise nach einem der vorhergehenden Ansprüche, **dadurch gekennzeichnet,** dass das Profilmontageelement (1) wenigstens in seinem Inneren rohrförmig ausgebildet ist.

5. Markise nach einem der vorhergehenden Ansprüche, **dadurch gekennzeichnet,** dass zumindest eine Ausnehmung (3) scharnier- und/oder schnappverschlussförmig ausgebildet ist und gegebenenfalls zur Aufnahme von Abdeck- (13), Verblendungs- (14) oder Versteifungselementen (15) dient.

6. Markise nach einem der vorhergehenden Ansprüche, **dadurch gekennzeichnet,** dass das Profilmontageelement zumindest eine Längsbohrung (3t) aufweist, die im Betriebsfall zumindest ein zylindrisches Bewegungselement (2e) aufnimmt, welches als Scharnier wirkt, wobei das Scharnier bevorzugt zur Lagerung eines Kipphebelgelenkes (16) dient. (Fig. 6)

7. Markise nach einem der vorhergehenden Ansprüche, **dadurch gekennzeichnet,** dass das Profilmontageelement aus einer vorzugsweise stranggepressten, korrosionsfesten Legierung - z.B. aus Aluminium - besteht oder aus Blech in Rollformtechnik hergestellt ist und/oder eloxiert und/oder wetterfest beschichtet ist.

8. Markise nach einem der vorhergehenden Ansprüche, **dadurch gekennzeichnet,** dass alle offenen bzw. nicht benutzten Ausnehmungen (3) mittels - vorzugsweise einschieb- oder aufschnappbaren - Alulamellen abgedeckt sind, wobei dafür insbesondere schmale Nuten im Bereich der Vorsprünge (4) vorgesehen sind.

9. Markise nach einem der vorhergehenden Ansprüche, **dadurch gekennzeichnet,** dass wenigstens eine der Ausnehmungen (3), gegebenenfalls eine zylindrische Bohrung, für die Aufnahme eines Gewindes bzw. einer Schraube in Längsrichtung des Elementes (1) ausgebildet ist.

## Claims

1. Awning having at least one support arm (8) on which a mounting element (1) is fastened for receiving and holding various fastening and/or movement elements (2), having groove- and/or tube-like recesses (3) for receiving the fastening and/or movement elements (2), one of which recesses (3) is provided with projections (4) flange-like in section and receives a sliding block (5) with a threaded hole (6) for receiving a bolt (7) which serves for fastening the mounting element (1) on the support arm (8), characterized in that the mounting element is in the form of a profile mounting element (1) approximately polygonal in section, recesses (3) being formed in at least two sides of the polygon, and the recess or recesses on one side of the polygon being formed for the passage of two adjacent fastening bolts (7), at least two adjacent threaded holes (6) being provided in the sliding block (5), or at least two recesses (3) having at least one sliding block (5) each for at least one bolt (7) each being provided side by side, and that, in the operating state, the tensile force-transmitting connection between profile mounting element (1) and support arm (8) is provided exclusively by the bolts (7), and that recesses (3) are arranged on at least one side of the polygon, on which recesses the flange-like projections (4) have inward-projecting steps (9) for engaging - preferably diametrically opposite - recesses (10) in the respective sliding block (5).

2. Awning according to Claim 1, characterized in that the polygonal cross-sectional shape has different side lengths, and that - in the mounted state, the base (11) of the polygonal cross-sectional shape preferably faces a cloth shaft (12) of the awning.

3. Awning according to Claim 2, characterized in that the base of the polygonal cross-sectional shape which is adjacent to the cloth shaft is concave and thus moulds to the circumference of the cloth shaft.

4. Awning according to any of the preceding Claims, characterized in that the profile mounting element (1) is tubular at least in its interior.

5. Awning according to any of the preceding Claims, characterized in that at least one recess (3) is in the form of a hinge and/or snap closure and optionally serves for receiving cover elements (13), facing elements (14) or stiffening elements (15).

6. Awning according to any of the preceding Claims, characterized in that the profile mounting element has at least one longitudinal hole (3t) which, in operation, receives at least one cylindrical movement element (2e) which acts as a hinge, the hinge preferably serving to support a toggle lever joint (16). (Fig. 6)

7. Awning according to any of the preceding Claims, characterized in that the profile mounting element consists of a preferably extruded, corrosion-resistant alloy - for example of aluminium - or was produced from sheet metal by the rolling technique and/or is anodized and/or is provided with a weather-resistant coating.

8. Awning according to any of the preceding Claims, characterized in that all recesses (3) which are open or not used are covered by means of - preferably insertable or snap-on - aluminium lamellae, in particular narrow grooves being provided for this purpose in the region of the projections (4).

9. Awning according to any of the preceding Claims, characterized in that at least one of the recesses (3), optionally a cylindrical hole, is formed for receiving a thread or a bolt in the longitudinal direction of the element (1).

## Revendications

1. Banne, comportant au moins un bras support (8), sur lequel est fixé un élément de montage (1), destiné à recevoir et fixer différents éléments de fixation et/ou cinématiques (2), avec des évidements (3) en forme de rainures et/ou de tubes, destinés à recevoir les éléments de fixation et/ou cinématiques (2), évidements (3) dont l'un est pourvu de saillies (4) ayant en section transversale une forme en bride et loge un patin à rainure (5) présentant un trou taraudé (6) destiné à recevoir une vis (7) servant à la fixation de l'élément de montage (1) sur le bras support (8), caractérisée en ce que l'élément de montage est réalisé sous forme d'élément de montage profilé (1) à section transversale à peu près polygonale, où sur au moins deux côtés du polygone sont réalisés des évidements (3) et le ou les évidement(s) étant réalisé(s) sur un côté du polygone, pour laisser le passage à deux vis de fixation (7) situées l'une à côté de l'autre, dans le patin à rainure (5) étant prévus au moins deux trous taraudés (6) ménagés l'un à côté de l'autre, ou bien où au moins deux évidements (3), placés l'un à côté de l'autre, sont pourvus chacun d'au moins un patin à rainure (5) destiné chacun à au moins une vis (7), et en ce que, en état de fonctionnement, la liaison, transmettant une force de serrage et intervenant entre l'élément de montage profilé (1) et le bras support (8), s'effectue exclusivement par l'intermédiaire des vis (7), et en ce qu'au moins sur un côté du polygone sont ménagés des évidements (3), sur lesquels les saillies (4) du genre de brides présentent des talons (9) tournés vers l'intérieur et destinés à l'engagement dans des évidements (10) - de préférence mutuellement identiques - réalisés dans le patin à rainure (5) respectif.

2. Banne selon la revendication 1, caractérisée en ce que la forme polygonale de la section transversale présente des longueurs de côté différentes et en ce que - à l'état monté - la base (11) de la forme polygonale de la section transversale est tournée de préférence vers l'arbre à toile (12) de la banne.

3. Banne selon la revendication 2, caractérisée en ce que la base de la forme polygonale de la section transversale qui est voisine de l'arbre à toile est dotée d'une incurvaticn concave et épouse la forme de la périphérie de l'arbre à toile.

4. Banne selon l'une des revendications précédentes, caractérisée en ce que l'élément de montage profilé (1) est réalisé avec une forme tubulaire, au moins intérieurement.

5. Banne selon l'une des revendications précédentes, caractérisée en ce qu'au moins un évidement (3) est réalisé en forme de charnière et/ou de fermeture à déclic, et sert, le cas échéant, à recevoir des éléments de recouvrement (13), d'occultation-parement (14) ou de rigidification (15).

6. Banne selon l'une des revendications précédentes, caractérisée en ce que l'élément de montage profilé présente au moins un perçage longitudinal (3t) qui, en cas de fonctionnement, reçoit au moins un élément cinématique (2e) cylindrique qui agit comme une charnière, la charnière servant de préférence au montage d'une articulation à levier basculant. (figure 6).

7. Banne selon l'une des revendications précédentes, caractérisée en ce que l'élément de montage profilé est fabriqué à partir d'un alliage résistant à la corrosion, de préférence façonné par extrusion - par exemple en aluminium - ou fabriqué en tôle selon la technique de formage par roulage et/ou est revêtu par anodisation et/ou d'un revêtement résistant aux intempéries.

8. Banne selon l'une des revendications précédentes, caractérisée en ce que tous les évidements (3), ouverts ou non utilisés, sont recouverts à l'aide de lamelles d'aluminium - de préférence susceptibles d'être enfilées ou appliquées par encliquetage -, des rainures étroites étant en particulier prévues à cette fin dans la zone des saillies (4).

9. Banne selon l'une des revendications précédentes, caractérisée en ce qu'au moins l'un des évidements (3), le cas échéant un perçage cylindrique, est réalisé pour recevoir un filetage, respectivement une vis, dans la direction longitudinale de l'élément (1).
